# EUROPÄISCHE PATENTANMELDUNG

(11) **EP 2 072 169 A2**
(43) Veröffentlichungstag der Anmeldung: **24.06.2009**
(21) Anmeldenummer: 08021858.9
(22) Anmeldetag: 17.12.2008
(51) Int. Cl.: B23K 11/25

(54) **Einrichtung mit integriertem Lagesensor**

(30) Priorität: 22.12.2007 DE 102007062384
(71) Anmelder: Robert Bosch GmbH, 70469 Stuttgart (DE)
(72) Erfinder: Doertoluk, Ibrahim, 97589 Wiesthal (DE); Schnurr, Bernd, 97816 Lohr am Main (DE)
(74) Vertreter: Thürer, Andreas

(57) **Zusammenfassung**

Die Erfindung betrifft einen Aktuator 10 für eine beweglich angeordnete Vorrichtung, insbesondere eine Vorrichtung zum Fügen von aufeinanderliegenden Fügeteilen 7, insbesondere einer Schweißzange.

Die Aufgabe der Erfindung besteht darin, eine lageabhängige Ansteuerung einer in der Lage veränderlichen Vorrichtung zu realisieren, wobei der Zusatzaufwand möglichst gering gehalten werden soll.

Die Erfindung löst diese Aufgabe durch Integration eines Messmittels 2 zur Erfassung zumindest einer lagerabhängigen Messgröße in den Aktuator, wobei auch die Lage des Aktuators 10 aus der Messgröße ableitbar ist. Das Messmittel ist dabei vom Aktuator 10 umfasst.

Dies hat den Vorteil, dass zusätzliche Störkanten an der Vorrichtung, an der der Aktuator angeordnet ist, vermieden werden und das lagerabhängige Signal zusammen mit anderen vom Aktuator ohnehin an eine übergeordnete Steuerung 4 übermittelten Signalen leicht übermittelt werden kann.

## Beschreibung

Die Erfindung beschreibt einen Aktuator für eine beweglich angeordnete Vorrichtung, insbesondere eine Vorrichtung zum Fügen von aufeinander liegenden Fügeteilen, insbesondere eine Schweißzange, gemäß dem unabhängigen Anspruch 1 sowie ein Verfahren zum Betrieb einer Antriebseinrichtung, welche einen zuvor genannten Aktuator umfasst, gemäß dem unabhängigen Anspruch 13.

Die Erfindung betrifft alle Anwendungsbereiche, bei denen die räumliche Lage eines von einem Aktuator zu bewegenden Werkzeuges beeinflusst werden soll, wobei der Aktuator Teil des Werkzeuges ist oder zusammen mit dem Werkzeug im Raum beweglich angeordnet ist. In derartigen Fällen hat die räumliche Lage des Werkzeuges unmittelbare Auswirkungen auf die Ansteuergrößen des Aktuators, da je nach räumlicher Lage das Eigengewicht des Werkzeuges mehr oder weniger bei der Ansteuerung zu berücksichtigen ist, weil das Eigengewicht zusätzlich auf das Werkstück einwirkt. Derartige Anwendungsbeispiele sind beispielsweise im Bereich der Roboteranwendungen zu finden, insbesondere in Verbindung mit Bearbeitungsvorgängen an Werkstücken.

Aus dem Stand der Technik ist es bekannt mittels eines Lagesensors, welcher mittels eines separaten Gehäuses vor äußeren Einflüssen geschützt ist und welcher an einer zu bewegenden Vorrichtung angeordnet ist, eine lageabhängige Ansteuerung einer Bearbeitungsvorrichtung für Werkstücke zu realisieren. Die Konfiguration derartiger Lagesensoren erfolgt in der Regel mittels mechanischer Schalter (sogenannte DIP-Schalter) und wird manuell vorgenommen. Aufgrund der Anordnung des Sensors in einem separaten Gehäuse (IP65), welches den Sensor unter anderem auch vor Feuchtigkeitseinwirkungen schützt, entstehen Kostennachteile, weil zum einen das spezielle Gehäuse bereitgestellt werden muss und zum anderen auch Montagevorgänge an der Vorrichtung selbst anfallen. Die Handhabung einer solchen Anordnung ist recht umständlich, weil beispielsweise im Falle der Konfiguration des Lagesensors das Gehäuse zunächst geöffnet werden muss, um die mechanischen Schalter manuell zu betätigen. Zusätzlich hat ein separates Gehäuse den Nachteil, dass es einen direkten Einfluss auf die äußeren Konturen der Vorrichtung hat, an der das Gehäuse montiert ist. Handelt es sich beispielsweise bei dieser Vorrichtung um eine Schweißzange, welche auch in entlegene Winkel von Automobilkarosserien vordringen muss, so ist leicht ersichtlich, dass das externe Gehäuse insbesondere bei derartigen Anwendungen beschädigt oder gar von der Schweißzange abgerissen werden könnte. Dies kann zu kostenintensiven Ausfällen während des Betriebs der Schweißzange führen.

Die Patentschrift DE 103 51126 B3 zeigt eine Einrichtung zur Kompensation der in Längsrichtung auf eine verfahrbare Kolbenstange eines lagerveränderbaren Druckmittelzylinders einwirkenden Gewichtskraft mittels einer elektronischen Steuereinheit zur die Gewichtskraft berücksichtigenden Ansteuerung mindestens eines dem Druckmittelzylinder zumindest einseitig beaufschlagenden Mehrwegventils, wobei ein Sensor zur Erfassung der aktuellen Position des Druckmittelzylinders vorgesehen ist, woraus die elektronische Steuereinheit die aktuelle in Längsrichtung auf die verfahrbare Kolbenstange einwirkende Gewichtskraft bestimmt, um hiervon abhängig von dem die Gewichtskraft kompensierenden Sollwert zur Ansteuerung eines als Druckregelventil ausgebildeten Mehrwegeventils zu ermitteln.

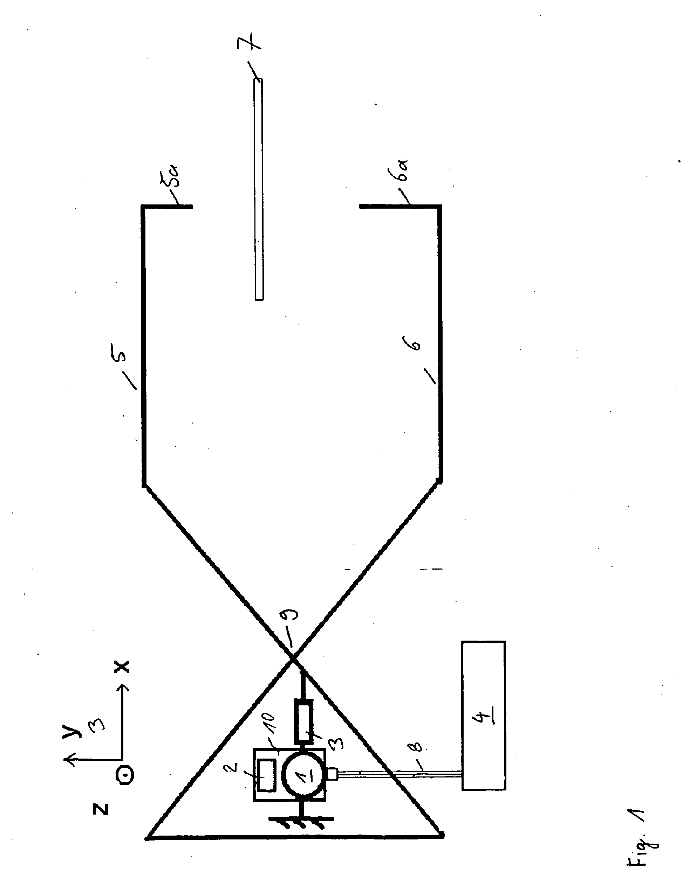

Es ist außerdem in Figur 1 der zuvor genannten Patentschrift eine Schweißzange gezeigt, welche einen Lagesensor umfasst. Die Schweißzange besteht im wesentlichen aus einem ortsfesten Trägerarm, der auch an einem nicht weiter dargestellten Roboter angebracht werden kann. Am Lager des Trägerarms ist ein statischer Arm sowie ein gegenüberliegender dynamischer Arm angelenkt. Dem statischen Arm ist eine erste Schweißelektrode zugeordnet und dem dynamischen Arm ist eine zweite Schweißelektrode zugeordnet. Über eine Druckmittelbeaufschlagung des zwischen dem statischen Arm und dem dynamischen Arm angebrachten Spannzylinders erfolgt ein Öffnen oder Schließen der beiden Schweißelektroden, so dass die Bleche durch Punktschweißen miteinander verbindbar sind. Der Zangenschwerpunkt liegt aufgrund des unsymmetrischen Aufbaus der Schweißzange nicht im Armlager. Da die Bleche und der Trägerarm von Schweißpunkt zu Schweißpunkt Lagetoleranzen aufweisen, ist der statische Arm schwimmend gelagert, das heißt mit einem weiteren Freiheitsgrad versehen. Den Freiheitsgrad erhält der statische Arm durch die nicht starre Befestigung mittels eines Druckmittelzylinders an dem Trägerarm, so dass der Druckmittelzylinder hier eine Art Ausgleichszylinder darstellt. Damit die Bleche beim Ansetzen der Schweißelektroden zur Ausführung eines neuen Schweißpunktes nicht verbogen werden, erfolgt eine Anpassung der Druckdifferenz im Druckmittelzylinder an den Drehwinkel der Schweißzange um die in Figur 1 dargestellte Achse X. Hierfür ist ein nach Art eines elektropneumatischen Druckregelventils ausgebildetes Mehrwegeventil vorgesehen, welches mit einem integrierten Sensor nach Art eines Beschleunigungssensors ausgestattet ist. Das Mehrwegeventil ist derart an der Schweißzange montiert, dass von dem Sensor nur Drehungen um die X-Achse erfasst werden. In Figur 1 ist die anfangs erläuterte Tatsache, dass der Sensor die Kontur der Schweißzange ungünstig beeinflusst, deutlich zu sehen. Der Sensor ist nämlich am unteren dynamischen Arm seitlich angeordnet. Fährt nun die Schweißzange beispielsweise durch einen schmalen Spalt in eine Karosseriekomponente ein, so kann der Lagesensor leicht von der Schweißzange abgerissen werden. Bringt man den Sensor an einer geschützten Stelle an, so ist er wiederum nicht mehr für die Konfiguration leicht zugänglich.

Die Nachteile, welche sich aus dem genannten Stand der Technik ergeben, bestehen unter anderem in der Notwendigkeit eines separaten Gehäuses und dem damit verbundenen höheren Montageaufwand. Außerdem existieren noch Nachteile bezüglich der Konturbeeinflussungen, bezüglich des hohen Verkabelungsaufwandes zwischen Lagersensorgehäuse und weiterverarbeitender Einheit und bezüglich des mit der Konfiguration des Sensors verbundenen manuellen Aufwandes.

Es ist daher die Aufgabe der Erfindung die zuvor genannten Nachteile möglichst zu reduzieren und einen Aktuator für eine beweglich angeordnete Vorrichtung zur Verfügung zu stellen, welcher ohne nennenswerten Mehraufwand eine Steuerung der räumlich veränderbaren Vorrichtung auch bei verschiedensten Raumlagen zuverlässig ermöglicht. Zusätzlich soll ein Verfahren zum Betrieb des Aktuators in Verbindung mit einer Antriebseinrichtung zur Verfügung gestellt werden.

Die Erfindung löst diese Aufgabe dadurch, dass der Aktuator ein Messmittel zur Erfassung zumindest einer lageabhängigen Messgröße umfasst, wobei auch die Lage des Aktuators und/oder die Lage einer vom Aktuator angesteuerten Vorrichtung innerhalb zumindest einer Ebene des Raumes, innerhalb dessen der Aktuator oder die Vorrichtung, an der der Aktuator angeordnet sein kann, aus der Messgröße ableitbar ist. Das vom Aktuator umfasste Messmittel liefert demnach zumindest ein Ausgangssignal, welches abhängig von der räumlichen Lage, insbesondere innerhalb zumindest einer Ebene, des Aktuators selbsttätig durch das Messmittel selbst veränderbar ist. Das Ziel dieser Lösung liegt darin, die lageabhängige Komponente der Gewichtskraft der beweglichen Teile der Vorrichtung zu kompensieren, so dass ein mittels der Vorrichtung zu bearbeitendes Objekt nicht mit der Gewichtskraft belastet wird.

Das Messmittel ist im Falle der erfindungsgemäßen Lösung nicht mehr an der Vorrichtung selbst angeordnet, sondern Bestandteil des Aktuators, welcher an der Vorrichtung angeordnet ist. Bestandteil des Aktuators bedeutet, dass der Lagesensor beispielsweise innerhalb des Aktuatorgehäuses oder am Aktuatorgehäuse (innen, außen, in einer Gehäuseausnehmung) angeordnet sein kann. Es entfällt damit ein sonst notwendiges separates Gehäuse zur Realisierung der Lösung und damit der zusätzlich erforderliche Montageaufwand, insbesondere auch der Verkabelungsaufwand. Ebenfalls entfällt die durch das separate Gehäuse bedingte zusätzliche Störkante an der Vorrichtung, wie dies aus dem Stand der Technik bekannt ist. Bevorzugt ist es möglich auch die Neigung des Aktuators innerhalb zumindest einer Ebene des Raumes aus der Messgröße abzuleiten.

Das Messmittel gibt vorzugsweise ein sinusförmiges Signal aus, aus dessen Phasenlage ein Rückschluss auf die räumliche Lage des Aktuators innerhalb der Ebene möglich ist. Die Phasenlage könnte beispielsweise eine Information zum Lagewinkel und die Amplitude eine Information bezüglich der Gewichtskraftkomponenten enthalten. Diese Informationen wären leicht mittels einer nachgeschalteten Steuerung auswertbar. Auch die Neigung des Aktuators innerhalb der Ebene wäre somit aus der Messgröße ableitbar.

Konkrete Ausgestaltungsformen sind mittels der abhängigen Patentansprüche definiert.

Besonders bevorzugt ist es möglich auch die dynamische Beschleunigung des Aktuators, insbesondere auch die statische Beschleunigung, insbesondere auch die Gravitation, aus dieser Messgröße abzuleiten. Dies ermöglicht die Berücksichtigung weiterer Zustandsgrößen, welche im Betrieb einer anzusteuernden Vorrichtung auftreten können, was insbesondere für eine möglichst exakte Lageregelung vorteilhaft sein kann. Die Erfassung der dynamischen Beschleunigung würde beispielsweise Sinn machen zum Zwecke einer Beschleunigungsrückführung für ein Positioniersystem (Roboter, Ausgleichsmotorregler).

Vorzugsweise ist das Messmittel derart sensibel realisiert, dass auch eine Vibration des Aktuators aus den vom Messmittel gelieferten Messdaten ableitbar ist. Das bedeutet, das Messmittel ist derart empfindlich realisiert, dass es schon bei kleinsten Lageänderungen, welche sich beispielsweise im Rahmen von Vibrationen einstellen können, reagiert. Es sind hier Lageänderungen im Millimeterbereich gemeint.

Ganz besonders bevorzugt werden mehrere Messmittel vom Aktuator derart umfasst, dass auch die Lage des Aktuators innerhalb verschiedener Raumebenen mittels dieser Messmittel ableitbar ist. Sofern dies für die Applikation des Kunden erforderlich ist, könnten somit dreidimensionale Raumlagen abgebildet werden.

Vorteilhafterweise ist das Messmittel selbst elektronisch parametrierbar. Somit ist ein manueller mechanischer Zugang nicht mehr erforderlich und das Messmittel kann dadurch gut geschützt vor äußeren Einwirkungen innerhalb des Aktuatorgehäuses leicht angeordnet werden. Im Rahmen der Parametrierung könnte beispielsweise die Einstellung eines Nullpunktes zur Definition der Ausgangslage des Aktuators im Raum notwendig werden oder die Verstärkung eines mittels des Messmittels generierten Ausgangssignale könnte aus der Ferne eingestellt werden. Wenn das Messmittel bereits ein lageabhängiges sinusförmiges Signal ausgibt, wäre beispielsweise nur noch die auszugebende Amplitude zu parametrieren. Die Parametrierung der Amplitude erfolgt auch unter Berücksichtigung der Erdanziehungskraft F_{G} = m*g [N]. Das vom Messmittel gelieferte lageabhängige Signal wird zur Erzeugung eines Sollwertes für die Ansteuerung des Aktuators herangezogen. Man kann die Verarbeitung der Erdanziehungskraft F_{G} in Analogie zu einer schiefen Ebene betrachten. Die Hangabtriebskraft ist vom Neigungswinkel (alpha) der schiefen Ebene abhängig. Um eine Masse auf einer schiefen Ebene zu halten ist eine Gegenkraft mit F = F_{G} * sin(alpha) erforderlich. Eine hierzu vergleichbare Kraft muss mittels des Aktuators aufgebracht werden, um die lageabhängige Gewichtskraft der Vorrichtung zu kompensieren.

Zur Inbetriebnahme des Aktuators ist eine Antriebseinrichtung erforderlich. Die Antriebseinrichtung umfasst bevorzugterweise den erfindungsgemäßen Aktuator und ein Betriebsmittel zur Versorgung des Aktuators mit für den Betrieb des Aktuators erforderlichen Betriebsdaten, wobei das Betriebsmittel derart ausgebildet ist, dass die Ermittlung der Betriebsdaten unter Berücksichtigung der mittels des Messmittels erfassten Messgrößen erfolgt. Das Betriebsmittel erhält vom Aktuator unter anderem lagespezifische Informationen und gegebenenfalls auch weitere Informationen, wie die momentane Beschleunigung. Zum Betrieb der Antriebseinrichtung sind folgende Verfahrensschritte vorgesehen: 1. Erfassen der Daten des Messmittels mittels des Betriebsmittels (z.B. Lageinformationen durch Auswertung des vom Messmittel gelieferten Signals bezüglich der Amplitude und der Phase). 2. Ermittlung von für den Betrieb des Aktuators erforderlichen Betriebsdaten unter Berücksichtigung der mittels des Betriebsmittels erfassten Daten des Messmittels (z.B. Sollwertgenerierung). 3. Betrieb des Aktuators mittels des Betriebsmittels unter Berücksichtigung der mittels des Betriebsmittel ermittelten Betriebsdaten (z.B. Ansteuerung des Aktuators mit dem Sollwert). Somit kann die Antriebseinrichtung die auf den Aktuator, abhängig von der Lage der mittels des Aktuators angetriebenen Vorrichtung, einwirkende Gewichtskraft ermitteln und abhängig von dieser Gewichtskraft den Aktuator betreiben.

Vorzugsweise ist das Betriebsmittel als Steuereinrichtung oder als Regeleinrichtung oder als Kombination aus einer Steuereinrichtung und einer Regeleinrichtung realisiert. Beispielsweise könnte es sich bei dem Betriebsmittel um eine sogenannte Antriebsregeleinrichtung handeln, wie sie von der Anmelderin unter dem Namen IndraDrive zum Anmeldezeitpunkt am Markt angeboten wird. Das Betriebsmittels ist derart mit dem Messmittel mittels eines Verbindungsmittels verbunden und realisiert, dass das Messmittel mittels des Betriebsmittels parametrierbar ist. Zur Realisierung der Verbindung ist ein Datenübertragungsmittel vorgesehen, welches insbesondere zur analogen und/oder digitalen Übertragung von Daten des Messmittels und/oder von Daten einer zusätzlich gegebenenfalls vom Aktuator umfassten Wegemesseinrichtung zur Messung der relativen Lage der relativ zueinander beweglichen Aktuatorelemente, vorgesehen ist.

Zum Betrieb des Aktuators werden die Betriebsdaten von der Antriebsregeleinrichtung in Form zumindest eines Sollwertes vorgegeben. Ein vom Messmittel ausgegebenes sinusförmiges Signal könnte unter Berücksichtigung seines Momentanwertes beispielsweise derart von der Antriebsregeleinrichtung verarbeitet werden, dass aus diesem Signal ein Sollwert abgeleitet wird. Handelt es sich bei dem Aktuator beispielsweise um einen Servomotor, so könnte der Sollwert ein Stromsollwert für den Servomotor sein, welcher mittels eines Antriebsregelgerätes (IndraDrive) lageabhängig vorgeben wird. Der Sollwert könnte auch in Form eines Momentensollwertes vorgegeben werden, welcher jedoch direkt proportional zum Stromsollwert ist. Alternativ zu dieser zuvor genannten Lösung könnte es sich bei dem Aktuator auch um einen Pneumatikaktuator oder um einen Hydraulikaktuator handeln, wobei zum Betrieb des jeweiligen Aktuators ebenfalls Betriebsdaten in Form eines oder mehrerer Sollwerte vorgegeben werden. Allerdings handelt es sich bei diesen Sollwerten nicht um Strom- oder Momentensollwerte, sondern beispielsweise um Drucksollwerte. Selbstverständlich könnten auch beliebige andere Sollwerte unter Berücksichtigung der vom Messmittel erfassten Messgrößen vom Betriebsmittel generiert werden, beispielsweise Volumensollwerte, Positionssollwerte, Wegesollwerte und Geschwindigkeitssollwerte.

Sowohl die Initialisierung des Messmittels, beispielsweise die Definition bestimmter Ausgangslagen im Raum, als auch weitere Parametrierungen, wie Signalpegel, Datenformate und so weiter, könnten dann mittels des Betriebsmittels aus der Ferne und automatisch parametriert werden. Vorzugsweise erfolgt die Parametrierung der Amplitude des vom Messmittel gelieferten Messsignals unter Berücksichtigung der Erdanziehungskraft F_{G} = m*g [N].

Zur Realisierung einer Verbindung zwischen Betriebsmittel und Messmittel ist ein Übertragungsmittel vorgesehen, welches insbesondere zur gemeinsamen Übertragung (digital und/oder analog) von Daten des Messmittels und vorzugsweise auch zur gleichzeitigen Übertragung von Daten einer zusätzlich vom Aktuator umfassten Wegemesseinrichtung zur Messung der relativen Lage der relativ zueinander beweglichen Aktuatorelemente vorgesehen ist. Diese Daten können dann vorzugsweise gemeinsam oder vorzugsweise getrennt mittels desselben oder mehrerer unterschiedlicher Datenübertragungsmittel zwischen Aktuator und Betriebsmittel übertragen werden.

Im Folgenden soll nun die Erfindung anhand einiger Figuren grob schematisch erläutert werden. Es handelt sich dabei um beispielhafte Ausführungsformen, welche unter Berücksichtigung des Könnens und des Kenntnisstandes eine Fachmannes auch abgewandelt werden können.

Figur 1 zeigt eine Schweißzangenapplikation.
Figur 2 veranschaulicht die Signalaufbereitung.
Figur 3 dient zur Veranschaulicht der Funktionsweise des Messmittels.

Figur 1 zeigt schematisch eine Schweißzange 5,6,9, in diesem speziellen Beispiel eine X-förmige Schweißzange. Die Schweißzange umfasst Ausleger 5, 6 an denen die Schweißelektroden 5a und 6a angeordnet sind. Zwischen den Elektroden 5a und 6a ist ein Blech 7 als Werkstück angedeutet, welches mit Schweißpunkten zu versehen ist. Weiter zu sehen ist ein sogenannter Ausgleichantrieb 10, welcher die Schweißzange als ganze Vorrichtung derart um den Drehpunkt 9 bewegen kann, dass die als Referenzelektrode ausgebildete Elektrode 6a an die Unterseite des zu schweißenden Werkstückes 7 angenähert ("angestellt") werden kann. Der Ausgleichsantrieb 10 umfasst wiederum einen Motor 1 und das erfindungsgemäße Messmittel 2, beispielsweise in Form eines Lagesensors 2 oder eines Beschleunigungssensors 2. Zwischen dem Ausgleichsantrieb 10 und den Zangenauslegern 5,6 ist eine Mechanikeinheit 3 angedeutet, welche die Bewegung des Motors 1 auf die Zangenausleger 5,6 überträgt. Während des Anstellvorgangs wird in der Regel um eine Linearbewegung gefordert, welche in diesem konkreten Beispiel mittels einer rotierenden Motorwelle und einer geeigneter Umlenkstange (Pleuel) oder mittels eines Linearmotors realisiert wurde. Auch wäre es denkbar mit einer Kugelumlaufspindel zu arbeiten, um aus der Rotationsbewegung eine lineare Bewegung zu realisieren. Der Ausgleichsantrieb 10 ist mit einer Steuereinheit 4 mittels eines Kabels 8 verbunden. Diese Verbindung 8 ist rein symbolisch zu betrachten und könnte auch kabellos erfolgen. Mittels der Verbindung 8 könnte sowohl die Rotorposition als auch die vom Messmittel 2 ermittelte Zangenraumlage an die Steuereinheit 4 übertragen werden. Dies könnte gleichzeitig beispielsweise im Rahmen eines gemeinsam verwendeten Datenübertragungsprotokolls oder separat erfolgen (parallel und/oder seriell, analog und/oder digital). Ein Übertragungsmittel 8 könnte gleichzeitig sowohl als Übertragungsmedium für die elektrische Leistung zum Betrieb des Motors 1, als auch zur Regulierung der Rotorposition und der Zangenraumlage dienen. Das Übertragungsmittel 8 könnte auch als Hybridkabel realisiert sein, indem unterschiedliche Übertragungsmedien oder Übertragungsverfahren verwendet werden.

Der Ausgleichsantrieb 10 dient dazu die gesamt Schweißzangenanordnung um den Drehpunkt 9 zu drehen und damit die Referenzelektrode 6a an das zu schweißende Objekt 7 anzunähern.

Das Motorsollmoment bzw. der Motorstrom muss dabei permanent an die Zangenraumlage angepasst werden, damit das zu schweißende Objekt immer mit der minimalen Aufprallenergie erreicht wird, andernfalls könnte das Objekt (z.B. Blech) beschädigt (z.B. verbogen) werden. Je nach Raumlage und/oder Raumebene ist ein kleineres oder größeres Moment bei der Anstellbewegung erforderlich, um das Eigengewicht der Schweizzange 5,6 zu kompensieren. Um dies zu realisieren liefert der erfindungsgemäße Lagesensor 2 Lageinformationen an die Steuereinheit 4 unter Verwendung des Übertragungsmittels 8. Die Steuereinheit 4 berechnet die erforderlichen Ansteuerparameter (Motormoment, Ansteuerzeit, usw.) und stellt den Momentensollwert bzw. den erforderlichen Stromsollwert für den Antrieb 10 zur Verfügung. Sofern es die Randbedingungen erlauben und dies für die Applikation als vorteilhaft angesehen werden wird, könnte die Lageinformation beispielsweise auch per WLAN oder sonstiger kabelloser Übertragungstechniken übermittelt werden.

Im konkreten Anwendungsbeispiel wurde ein Sensor als Messmittel 2 verwendet, welcher mittels einer Serienschaltung zweier veränderlicher Kondensatoren und einer Mittelanzapfung zwischen beiden Kondensatoren arbeitet. Während mit einer ersten und einer zweiten Kondensatorplatte die Zuleitung bzw. Ableitung des Sensors verbunden ist, ist eine dritte Kondensatorplatte vorgesehen, welche relativ zur ersten und zweiten Kondensatorplatte beweglich angeordnet ist und mittels der Mittelanzapfung elektrisch mit der Auswerteeinheit verbindbar ist. Abhängig von der Lage und/oder Beschleunigung des Sensors wird diese mittlere Platte in Bewegung versetzt und ändert dabei ihre jeweilige Distanz zur ersten bzw. zweiten ortsfesten Platte, was direkte Auswirkungen auf die messbare Kapazität der Anordnung hat, weil sich die Kapazität der Anordnung aus der Plattenfläche multipliziert mit der Elektrizitätskonstanten und dividiert durch den Abstand der Platten ergibt. Es besteht nun die Möglichkeit dieses vom Beschleunigungssensor erhaltene Signal zu digitalisieren und über das Mittel 8 an die Steuereinheit 4 zu kommunizieren oder analog zu übertragen. Die digitale Übertragung wird jedoch aufgrund der höheren Störsicherheit bevorzugt. Sensoren jeglicher Art, welche mittelbar oder unmittelbar die Lage des Aktuators bzw. der Vorrichtung erfassen können, sind für die erfindungsgemäßen Zwecke geeignet.

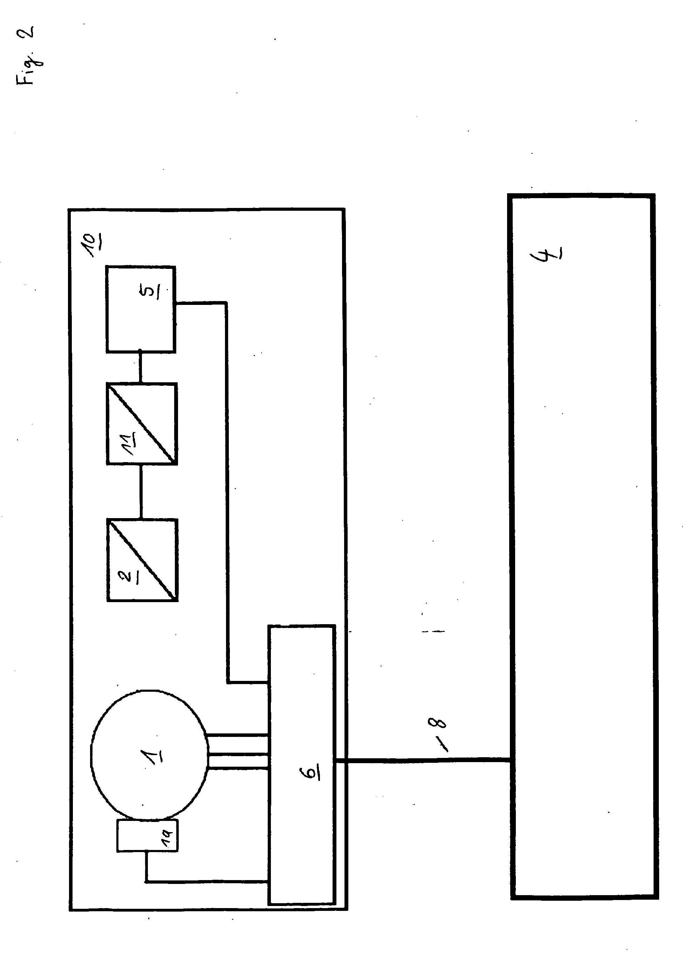

Anhand Figur 2 wird nun die Aufbereitung der vom Messmittel 2 gelieferten Messsignale mittels der Betriebseinrichtung 4 beschrieben. Aus der Figur 2 ist ersichtlich, dass vom Ausgleichsantrieb 10 (erfindungsgemäßer Aktuator) außer der bereits erwähnten Komponenten 1 und 2 noch weitere Komponenten 1a,11,5,6 umfasst sein können. Neben dem Motor 1 und dem Messmittel 2, könnte noch ein Analog-Digital-Wandler 11, eine Kommunikationseinheit 5 und ein Pollagegeber 1a umfasst sein. Außerdem muss noch ein Motoranschlussstecker 6 am Ausgleichsantrieb 10 vorhanden sein, welcher sowohl den leistungsmäßigen Anschluss als auch den signalseitigen Anschluss des erfindungsgemäßen Ausgleichsantriebs 10 an der Steuerung und einen Leistungsteil sicherstellt. Diese Anschlüsse könnten auch mittels separater Motoranschlussstecker (nicht gezeigt) realisiert sein. Signaldaten könnten beispielsweise alternativ oder teilweise auch drahtlos übertragen werden.

Die Zangenlage wird mittels des Messmittels 2 (Lage- und/oder Beschleunigungssensor 2) gemessen, welches typischerweise ein zur aktuellen Aktuatorlage korrelierendes und/oder proportionales Signal ausgibt. Das Signal verhält sich in diesem Beispiel sinusförmig und abhängig von der Kraft F_{G} (senkrecht zum Erdmittelpunkt gerichtete Gewichtskraftkomponente der Vorrichtung). Es gilt in einer Ebene: F = F_{G} * sin(alpha), wobei F eine vom Ausgleich 10 zu kompensierende Komponente der Zangengewichtskraft F_{G} ist und alpha der vom Messmittel erfasst Neigungswinkel der Vorrichtung. Das Spannungssignal kann entweder als verstärktes Analogsignal oder in digitaler Form an die Steuereinheit 4 übermittelt werden. Die Umwandlung des Analogsignals erfolgt über den zuvor erwähnten Analog-Digital-Wandler 11 der mit einer Rechen- und Kommunikationseinheit 5 verbunden ist. Der Analog-Digital-Wandler 11 und die Rechen- und Kommunikationseinheit 5 könnten auch mittels eines handelsüblichen Mikrocontrollers realisiert sein, d.h. der Analog-Digital-Wandler 11 kann auch in die Rechen- und Kommunikationseinheit 5 integriert sein. Die Rechen- und Kommunikationseinheit 5 sendet die digitalen Lagedaten vorzugsweise mittels eines. Protokolls an die Steuereinheit 4 unter Verwendung des Verbindungsmittels 8. Die Steuereinheit 4 und der erfindungsgemäße Ausgleichsantrieb 10 sind mittels des Motorsteckers 6 miteinander verbunden. Mittels des Verbindungsmittels 8 könnten, sofern es für die Applikation vorteilhaft ist, sowohl die Daten des Motorgebers 1a, als auch die Lagedaten des Messmittels 2 übertragen werden.

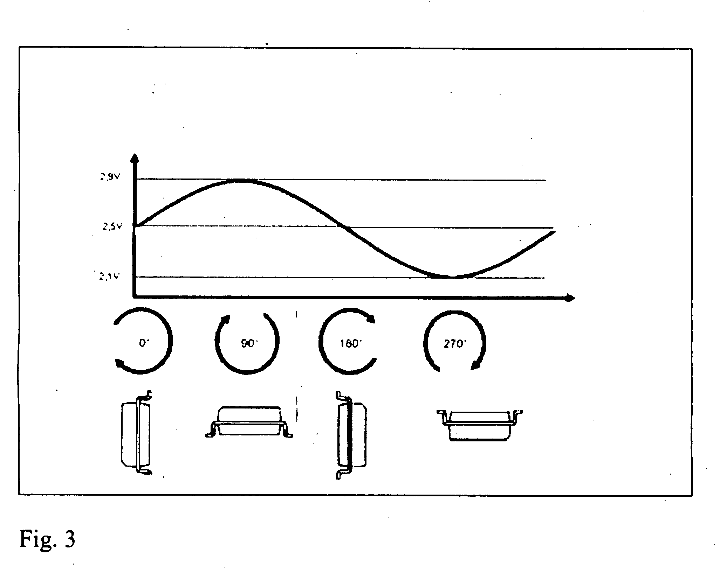

Figur 3 veranschaulicht die Funktionsweise eines im Rahmen eines von der Anmelderin realisierten Versuchsaufbaus verwendeten Messmittels 2. Das Messmittel 2 arbeitet auf Basis einer kapazitiven Messung, wobei sich die Kapazität abhängig von der räumlichen Lage des Sensors ändert (siehe auch Erläuterungen zu Figur 1). Als Ausgangssignal liefert das Messmittel 2 ein lageabhängiges sinusförmiges Signal. Der Momentanwert des Signals und die dem Momentanwert zuordenbare Phasenlage des Signals korreliert mit der Lage des Messmittels im Raum und den zu kompensierenden Gewichtskraftkomponenten, weil sich die Raumlage auf den Abstand der Kondensatorplatten auswirkt. Auch wenn das System nicht bewegt wird, ergibt sich bei einer bestimmten Raumlage (z.B. 90°) ein anderer Plattenabstand im Vergleich zur Ausgangslage (zB. 0°). Aus diesem Grunde ist auch eine statische Beschleunigung aus dem Messsignal ableitbar.

Die Steuerung 4 stellt zwei mögliche Betriebsarten zur Verfügung:
1. Die Steuerung 4 und der Aktuator 10 mit integriertem Sensor 2 sind periodisch miteinander verbunden.
2. Steuerung 4 und Aktuator 10 mit integriertem Sensor 2 sind beständig miteinander verbunden.

In beiden Fällen generiert der Sensor 2 ein analoges Signal. Das Signal kann entweder verstärkt und analog weiterverarbeitet werden oder einem Analog-Digital-Wandler 11 zugeführt werden. Es wäre auch möglich das Signal vorab zu filtern, um Störgrößen auszuschalten. Sofern eine Analog-Digital-Wandlung 11 erfolgt, wird der somit erhaltene digitale Messwert an die Steuerung 4 beispielsweise mittels einer I2C-Verbindung oder eines synchronen seriellen oder asynchronen seriellen Protokolls übertragen. Die Steuerung 4 errechnet mittels des empfangenen digitalen oder analogen Wertes eine erste Stellgröße (z.B. Motorsollmoment) und/oder weitere aktuatorspezifische Stellgrößen und führt diese dem Aktuator 10 zu. Die Steuerung 4 steuert dann den Motor 1 des Aktuators 10 mittels einer dieser Sollwerte direkt an. Anschließend wiederholen sich die zuvor erwähnten Schritte je nach gewählter Betriebsart.

Die Unterbringung eines Messmittels (Sensor) 2, zur Erfassung zumindest einer lagerabhängigen Messgröße innerhalb oder unmittelbar an einem Aktuator, sei es ein elektrischer Servomotor oder ein Hydraulikaktuator oder ein Pneumatikaktuator ist neu und hat den Vorteil, dass sowohl Verkabelungsaufwand als auch zusätzliche Störkanten an der zu bewegenden Vorrichtung entfallen.

## Patentansprüche

1. Aktuator für eine beweglich angeordnete Vorrichtung, insbesondere für eine Vorrichtung zum Fügen von aufeinanderliegenden Fügeteilen, insbesondere einer Schweißzange,
**dadurch gekennzeichnet, dass**
ein Messmittel (2) vom Aktuator (10) umfasst ist, wobei zumindest ein Ausgangssignal des Messmittels abhängig von der räumlichen Lage, insbesondere innerhalb zumindest einer Ebene (3), des Aktuators (10) veränderbar ist.

2. Aktuator nach Anspruch 1, wobei mittels des Messmittels (2) ein sinusförmiges Signal generierbar ist, dessen Phasenlage sich abhängig von der räumlichen Lage des Aktuators (2) ändert.

3. Aktuator nach einem der vorhergehenden Ansprüche, wobei auch die Neigung des Aktuators (10) innerhalb der Ebene (3) aus dem Ausgangssignal ableitbar ist.

4. Aktuator nach einem der vorhergehenden Ansprüche, wobei auch die Beschleunigung des Aktuators (10), insbesondere die statische und/oder die dynamische Beschleunigung, insbesondere auch die Gravitation, aus dem Ausgangssignal ableitbar ist.

5. Aktuator nach einem der vorhergehenden Ansprüche, wobei das Messmittel (2) derart sensibel realisiert ist, dass auch eine Vibration des Aktuators (10) aus dem Ausgangssignal ableitbar ist.

6. Aktuator nach einem der vorhergehenden Ansprüche, wobei mehrere Messmittel (2) umfasst sind, so dass auch die Lage des Aktuators (10) innerhalb mehrerer Raumebenen (3) ableitbar ist.

7. Aktuator nach einem der vorhergehenden Ansprüche, wobei das Messmittel (2) parametrierbar ist bezüglich der Amplitude des vom Messmittel (2) gelieferten Ausgangssignals unter Berücksichtigung der Erdanziehungskraft F_{G} = m*g [N].

8. Antriebseinrichtung mit Aktuator (10) nach einem der vorhergehenden Ansprüche und mit Betriebsmittel (4) zur Versorgung des Aktuators mit für den Betrieb des Aktuators (10) erforderlichen Betriebsdaten, wobei das Betriebsmittel (4) derart ausgebildet ist, dass die Ermittlung der Betriebdaten unter Berücksichtigung zumindest einer mittels des Messmittels (2) erfassbaren Messgröße erfolgt.

9. Antriebseinrichtung nach Anspruch 8, wobei das Betriebsmittel (4) eine Steuereinrichtung oder eine Regeleinrichtung oder eine Kombination aus einer Steuereinrichtung und einer Regeleinrichtung ist.

10. Antriebseinrichtung nach einem der Ansprüche 8 oder 9, wobei das Betriebsmittels (4) derart mit dem Messmittel (2) mittels eines Verbindungsmittels (8) verbunden und realisiert ist, dass das Messmittel (2) mittels des Betriebsmittels (4) parametrierbar ist.

11. Antriebseinrichtung nach Anspruch 10, wobei zur Realisierung der Verbindung ein Datenübertragungsmittel (8) vorgesehen ist, welches insbesondere zur analogen und/oder digitalen Übertragung von Daten des Messmittels (2) und/oder von Daten einer zusätzlich vom Aktuator (10) umfassten Wegemesseinrichtung zur Messung der relativen Lage der relativ zueinander beweglichen Aktuatorelemente, vorgesehen ist.

12. Antriebseinrichtung nach einem der vorhergehenden Ansprüche, wobei der Aktuator (10) ein pneumatischer oder ein hydraulischer oder ein elektrischer Aktuator (10), insbesondere ein Servomotor mit Pollagegeber, ist.

13. Verfahren zum Betrieb einer Antriebseinrichtung mit Aktuator (10) und mit Betriebsmittel (4) zur Versorgung des Aktuators (10) mit für den Betrieb des Aktuators (10) erforderlichen Betriebsdaten, wobei das Betriebsmittel (4) derart ausgebildet ist, dass die Ermittlung der Betriebsdaten unter Berücksichtigung zumindest einer mittels des Messmittels (2) erfassten Messgröße erfolgt mit folgenden Verfahrensschritten:
a) Erfassen der Daten des Messmittels (2) mittels des Betriebsmittels (4);
b) Ermittlung von für den Betrieb des Aktuators (10) erforderlichen Betriebsdaten unter Berücksichtigung der mittels des Betriebsmittels (4) erfassten Daten des Messmittels (2);
c) Betrieb des Aktuators (10) mittels des Betriebsmittels (4) unter Berücksichtigung der mittels des Betriebsmittels (4) ermittelten Betriebsdaten.

14. Verfahren nach Anspruch 13, wobei das Betriebsmittel (4) eine Steuereinrichtung oder eine Regeleinrichtung oder eine Kombination aus einer Steuereinrichtung und einer Regeleinrichtung ist und der Aktuator (10) ein Servomotor ist, wobei zum Betrieb des Aktuators (10) Betriebsdaten in Form zumindest eines Sollwertes, insbesondere eines Stromsollwertes oder eines Momentensollwertes, für den Aktuator (10) vom Betriebsmittel (4) bereitgestellt werden.

15. Verfahren nach Anspruch 13, wobei das Betriebsmittel eine Steuereinrichtung oder eine Regeleinrichtung oder eine Kombination aus einer Steuereinrichtung und einer Regeleinrichtung ist und der Aktuator (10) ein Pneumatikaktuator oder ein Hydraulikaktuator ist, wobei zum Betrieb des Aktuators (10) Betriebsdaten in Form zumindest eines Sollwertes, insbesondere eines Drucksollwertes, vom Betriebsmittel (4) bereitgestellt werden.

16. Verfahren nach einem der Ansprüche 13 bis 15, wobei das Betriebsmittels (4) auch eine Parametrierung des Messmittels (2) vornimmt, vorzugsweise eine Parametrierung der Amplitude des vom Messmittel (2) gelieferten Signals unter Berücksichtigung der Erdanziehungskraft F_{G} = m*g [N].

17. Verfahren nach einem der Ansprüche 13 bis 16, wobei das Betriebsmittel (4) Daten des Messmittels und auch Daten einer zusätzlich vom Aktuator (10) umfassten Wegemesseinrichtung zur Messung der relativen Lage der relativ zueinander beweglichen Aktuatorelemente verarbeitet, wobei diese Daten digital und/oder analog zwischen Aktuator (10) und Betriebsmittel (4) übertragen werden.
